Europäisches Patentamt

European Patent Office

Office européen des brevets

(19)

Veröffentlichungsnummer: **0 321 686**

**A1**

(12) **EUROPÄISCHE PATENTANMELDUNG**

(21) Anmeldenummer: 88118384.2

(51) Int. Cl.⁴ **B23K 26/10 , B23K 26/08**

(22) Anmeldetag: 04.11.88

(30) Priorität: 22.12.87 DE 3743461

(43) Veröffentlichungstag der Anmeldung:
28.06.89 Patentblatt 89/26

(84) Benannte Vertragsstaaten:
**CH DE ES FR GB IT LI NL SE**

(71) Anmelder: **MESSER GRIESHEIM GMBH
Hanauer Landstrasse 330
D-6000 Frankfurt/Main 1(DE)**

(72) Erfinder: **Müller, Alfred, Dr.
Innsbrucker Strasse 63
D-8038 Gröbenzell(DE)**
Erfinder: **Waizenegger, Hans-Jürgen
Buchenauer Strasse 63
D-8080 Fürstenfeldbruck(DE)**
Erfinder: **Ohlrich, Uwe
Schlosskamp 19
D-2000 Wedel(DE)**

(54) **Mehrachsige Bearbeitungsstation mit einem einen Laserstrahl aussendenden Laser.**

(57) Die Erfindung betrifft eine mehrachsige Bearbeitungsstation mit einem einen Laserstrahl (11) aussendenden Laser (12) und einer neben mindestens einem Arbeitstisch (13, 14) angeordneten Tragkonstruktion (15), mit einem auf der Tragkonstruktion (15) über dem Arbeitstisch (13, 14) in einer ersten Achse verfahrbaren Wagen (26), auf welchem eine den Laserstrahl entlang der Verfahrstrecke des Wagens (26) in einen senkrecht zu diesem verfahrbaren Schlitten umlenkende Optik angeordnet ist.

Um die Positionier- und/oder Strahleigenschaften bei langen Verfahrwegen zu verbessern, ist die Bearbeitungsstation nach der Erfindung dadurch gekennzeichnet, daß der Laser zwischen der Verfahrstrecke des Wagens (26) vorzugsweise in der Mitte, angeordnet ist, daß der Laserstrahl (11) vorzugsweise senkrecht zu der Verfahrstrecke des Wagens (26) auf eine in oder an der Tragkonstruktion (15) angeordnete und in ihrer Lage verstellbare Optik auftrifft, die den aus dem Laser (12) austretenden Laserstrahl (11) auf die Optik des Wagens (26) umlenkt und daß die Optik des Wagens (26) in Abhängigkeit von der links oder rechts zu dem Laserstrahl (11) eingenommenen Stellung des Wagens (26) so verstellbar ist, daß der Laserstrahl (11) in jeder der Stellungen in den Schlitten umgelenkt wird.

FIG. 1

# Mehrachsige Bearbeitungsstation mit einem einen Laserstrahl aussendenden Laser

Die Erfindung betrifft eine mehrachsige Bearbeitungsstation mit einem einen Laserstrahl aussendenden Laser und einer neben mindestens einem Arbeitstisch angeordneten Tragkonstruktion, mit einem auf der Tragkonstruktion über dem Arbeitstisch in einer ersten Achse verfahrbaren Wagen, auf welchem eine den Laserstrahl entlang der Verfahrstrecke des Wagens in einen senkrecht zu diesem verfahrbaren Schlitten umlenkende Optik angeordnet ist.

Bei der Bearbeitung von Werkstücken werden zunehmend die Laser und das Werkstück stationär angeordnet und der aus dem Resonator austretende Laserstrahl mittels einer sogenannten "fliegenden Bearbeitungsoptik" entsprechend einer vorgegebenen Bearbeitungsbahn zu dem werkstück umgelenkt. Die Optik zur Umlenkung und Fokussierung des Laserstrahles wird hierzu auf einer Tragkonstruktion montiert und jeweils in Strahlrichtung bewegt. Die Genauigkeitsanforderungen an eine solche Tragkonstruktion steigen mit zunehmender Verfahrstrecke.

Aus der DE-OS 34 00 017 ist es bekannt, die angestrebte Positioniergenauigkeit mittels zweier Spindelantriebe zu erreichen. Sie sind jeweils mit mindestens einem Meßsystem gekoppelt, welche die Spindelantriebe genau zu steuern in der Lage sein sollen. Bei der EP 0199590 A2 wird der Laserstrahl in einem teleskopartig ausgebildeten Rohrsystem von dem Laser zu der "fliegenden Bearbeitungsoptik" geführt.

In der DE-OS 3416525 hat man dieses Problem durch die Anordnung eines auf der Tragkonstruktion verfahrenden Lasers gelöst. Mit dieser Einrichtung können jedoch keine hohen Verfahrgeschwindigkeiten bei kurzen Beschleunigungswegen erreicht werden.

Ferner ist aus der US-PS 4,223,201 eine Schweißanlage mit zwei Bearbeitungsstationen zu entnehmen, denen nur ein zwischen den Tragkonstruktionen für die "fliegenden Bearbeitungsoptiken" angeordneter Laser zugeordnet ist.

Der Erfindung liegt die Aufgabe zugrunde, die Positioniereigenschaften zu verbessern und/oder die Auswirkungen der Strahldivergenz bei einer Bearbeitungsstation mit vorzugsweise langen Verfahrwegen zu verringern.

Diese Aufgabe wird erfindungsgemäß dadurch gelöst, daß der Laser zwischen der Verfahrstrecke des Wagens, vorzugsweise in der Mitte, angeordnet ist, daß der Laserstrahl unter einem Winkel, vorzugsweise senkrecht, zu der Verfahrstrecke des Wagens auf mindestens eine in oder an der Tragkonstruktion angeordnete und in ihrer Lage verstellbare Optik auftrifft, die den aus dem Laser austretenden Laserstrahl auf der Optik des Wagens umlenkt und daß die Optik des Wagens in Abhängigkeit von der links oder rechts zu dem Laserstrahl eingenommenen Stellung des Wagens so verstellbar ist, daß der Laserstrahl in jeder der Stellungen in den Schlitten umgelenkt wird.

Die Erfindung ermöglicht es nunmehr bei mehrachsigen Bearbeitungsstationen die Strahlwege nahezu zu verdoppeln, ohne daß sich die Auswirkungen der Strahldivergenz am Werkstück verschlechtern. Hinzu kommt, daß bei den langen Strahlwegen die Auswirkungen der Strahldivergenz nicht durch zusätzliche optische Bauelemente und/oder elektrische Regelkreise verbessert werden müssen. An die Maschinen- und Spiegeljustage werden geringere Anforderungen gestellt.

Weitere vorteilhafte Ausführungsbeispiele der Erfindung sind in den Unteransprüchen angegeben.

Ein Ausführungsbeispiel der Erfindung ist in der Zeichnung dargestellt und wird im folgenden näher beschrieben.

Es zeigen:

Fig. 1 eine mehrachsige Bearbeitungsstation in perspektivischer Darstellung;

Fig. 2 eine schematische Draufsicht auf die mehrachsige Bearbeitungsstation.

Fig. 3 einen Reflektor

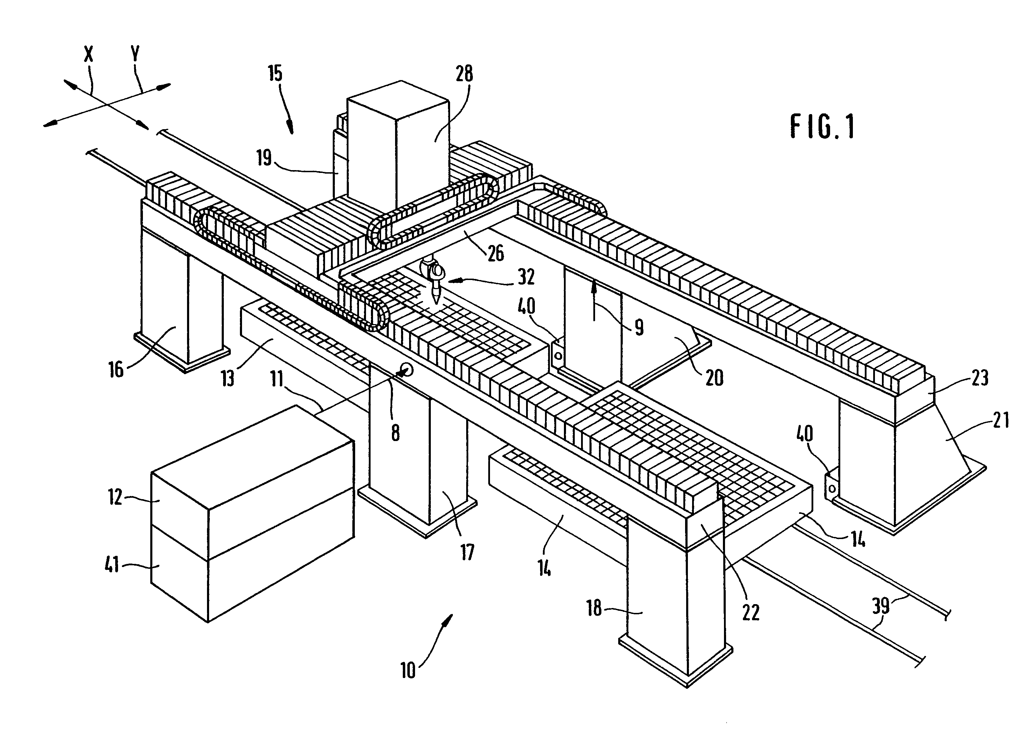

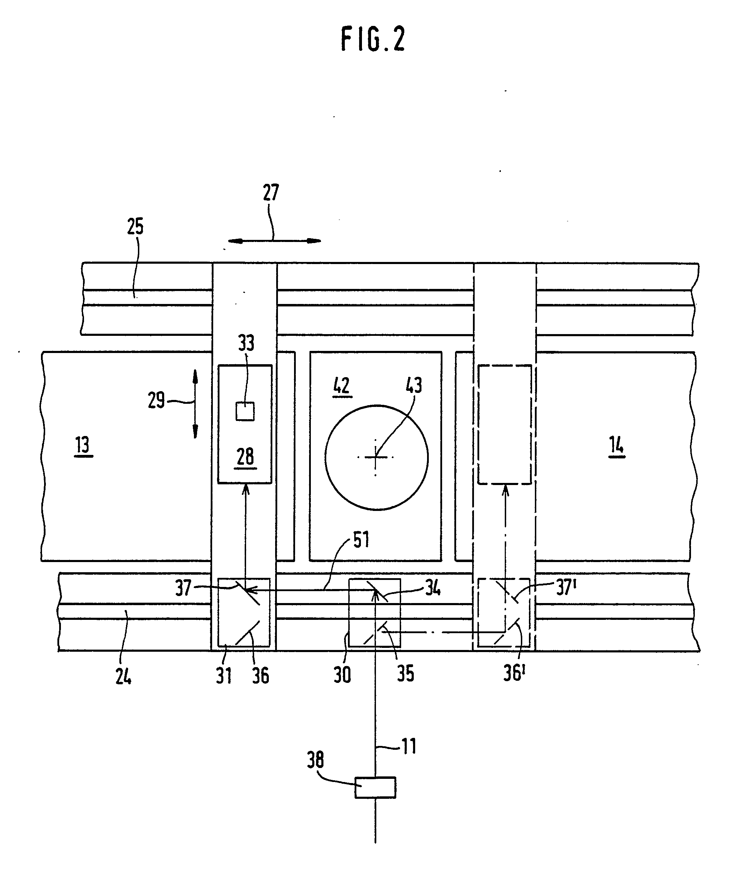

Fig. 1 zeigt eine mehrachsige Bearbeitungsstation 10. Die Bearbeitungsstation 10 besteht aus einem einen Laserstrahl 11 aussendenden Laser 12 und einer neben zwei Arbeitstischen 13, 14 angeordneten Tragkonstruktion 15. Die Tragkonstruktion 15 weist jeweils drei links und rechts neben den Arbeitstischen 13, 14 angeordnete Stützelemente 16, 17, 18, 19, 20, 21 auf, welche zwei im wesentlichen parellel zu den Werkstücktischen 13, 14 angeordnete Querträger 22, 23 tragen. Auf den Querträgern 22, 23 sind Führungen 24, 25 (Fig. 2) vorgesehen, entlang denen ein Wagen 26 verfahrbar ist. Die Arbeitstische 13, 14 befinden sich innerhalb der Stützelemente 16 bis 21 und können von dem Wagen 26 in einer ersten Achse 27 (X-Achse) überfahren werden. Auf dem Wagen 26 ist ein Schlitten 28 angeordnet, der senkrecht zur ersten Achse 27 in einer zweiten Achse 29 (Y-Achse) verfahrbar ist. An dem Schlitten 28 sind ein Bearbeitungskopf 32 mit einer nicht näher dargestellten Fokussieroptik und eine Optik 33 angeordnet, die den Laserstrahl 11 zu den Arbeitstischen 13, 14 umlenken und auf die Bearbeitungsstellen der Werkstücke fokussieren.

Der Laser 12 ist vorzugsweise in der Mitte der Trag konstruktion 15 angeordnet, wobei der Laserstrahl 11 vorzugsweise senkrecht (Pfeilrichtung 8 oder 9) zu der Verfahrstrecke des Wagens 26 auf eine in oder an der Tragkonstruktion 15 angeordnete Optik 30 auftrifft. In Fig. 1 tritt der Laserstrahl vorteilhaft senkrecht zu der Verfahrstrecke des Wagens 26 aus dem Laser 12 aus, wobei mit Pfeilrichtung 8 eine horizontale und mit Pfeilrichtung 9 eine vertikale Strahlrichtung des Laserstrahles 11 schematisch dargestellt ist. Die Optik 30 besteht nach einem Ausführungsbeispiel der Erfindung eus einem fest und einem in seiner Lage veränderbar angeordneten Reflektor 34, 35, die jeweils in Abhängigkeit von der links oder rechts zu dem auf die Reflektoren 34, 35 auftreffenden Laserstrahl 11 eingenommenen Stellung des Wagens 26 den Laserstrahl 11 entlang der Verfahrstrecke auf die Optik 31 des Wagens 26 umlenken. Hierzu lenkt der fest angeordnete Reflektor 34 den Laserstrahl 11 unter einem Winkel von 90 Grad auf die Optik 31 des Wagens 26, welcher in Fig. 2 links von dem senkrecht zu der Verfahrstrecke des Wagens 26 aus dem Laser 12 austretenden Laserstrahl 11 auf der Tragkonstruktion 15 angeordnet ist. Die Optik 31 des Wagens 26 besteht ebenfalls aus einem fest und einem in seiner Lage veränderbar angeordneten Reflektor 36 bzw. 37. Der in seiner Lage veränderbare Reflektor ist mit 37 bezeichnet und lenkt den Laserstrahl 11 auf die Optik 33 des Schlittens 28 von der er, über ein Strahlführungssystem, zu dem Bearbeitungskopf 32 geführt wird. Die Reflektoren 34, 35 und 36, 37 sind jeweils unter einem Winkel von 45 Grad zu dem auf sie auftreffenden Laserstrahl 11 angeordnet und schließen zwischen sich einen Winkel von 90 Grad ein. Über die Reflektoren 34, 37 wird der Laserstrahl 11 über die gesamte linke Verfahrstrecke der Tragkonstruktion 15 auf die Optik 33 des Schlittens 28 umgelenkt. Verfährt der Wagen 26 von seiner in der Fig. 2 eingenommenen linken Stellung (Vollinie) in die rechte Stellung (Strichlinie), dann wird der Laserstrahl 11 mittels eines Strahlabschalters 38 aus den Optiken 30, 31, 33 ausgeblendet und die verfahrbaren Reflektoren 35, 37 in eine zu den Reflektoren 34, 36 kollisionsfreie Stellung, beispielsweise nach unten aus dem Verfahrweg des Wagens 26 bewegt. Nachdem der Wagen die Optik 30 überfahren hat, wird der Reflektor 35 in den Strahlengang des Laserstrahles 11 bewegt, so daß nach dem Öffnen des Strahlabschalters 38 der Laserstrahl 11 unter einem Winkel von 90 Grad auf den Reflektor 36' auftrifft. Der Reflektor 37' bleibt in seiner Stellung außerhalb des Strahlganges angeordnet.

Im vorliegenden Ausführungsbeispiel ist das Umlenken des Laserstrahles 11 von der linken in die rechte Stellung des Wagens 26 in Verbindung mit verfahrbaren Reflektoren beschrieben worden. Selbstverständlich ist es auch möglich, diese Umlenkung mittels drehbaren Reflektoren vorzunehmen.

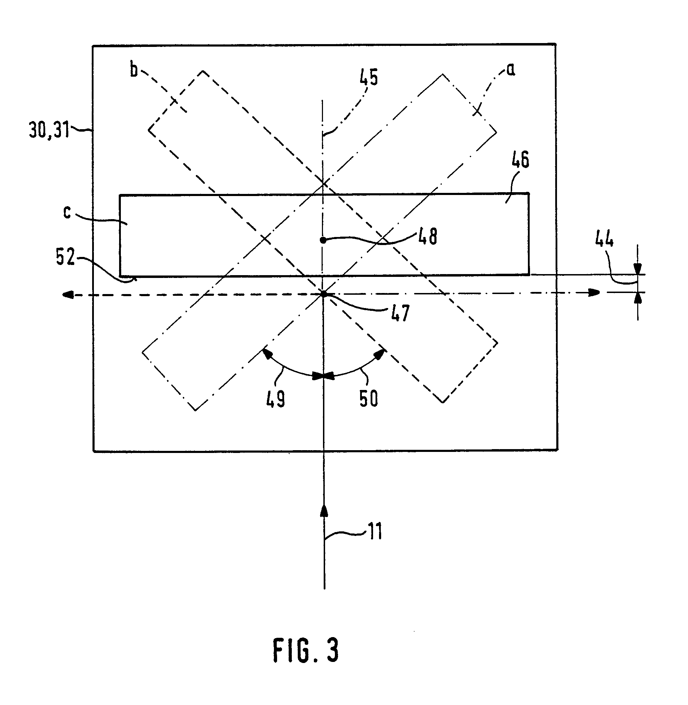

In der Fig. 3 sind die vorzugsweise gleich ausgebildeten Optiken 30 und 31, die jeweils nur einen Reflektor 46 aufweisen, dargestellt. Die aus jeweils nur einem Reflektor 46 bestehenden Optiken 30 und/oder 31 sind um die Strahlachse 45 des Laserstrahles 11 drehbar angeordnet. Dabei ist der Drehpunkt 48 des Reflektors 46 gegenüber dem Strahlauftreffpunkt 47 zurückversetzt. Der Reflektor 46 ist um den Drehpunkt 48 in die Stellungen a, b oder c drehbar. In den Stellungen a oder b ist der Reflektor 46 unter einem Winkel 49 oder 50 von vorzugsweise 45 Grad zu dem Laserstrahl 11 angeordnet. Der Laserstrahl 11 kann dadurch wahlweise nacheinander in zwei auf der gleichen optischen Achse liegende aber entgegengesetzte Richtungen gelenkt werden.

Wie Fig. 2 zeigt, ist den Optiken 30, 31 eine gemeinsame optische Achse 51 zugeordnet, so daß der Laserstrahl 11 durch Drehen des Reflektors 46 der Optik 30 wahlweise über die gesamte linke oder rechte Verfahrstrecke der Tragkonstruktion 15 auf die Optik 31 des Wagens 26 umgelenkt wird. Entsprechend wird durch Drehen des auf dem Wagen 26 angeordneten Reflektors 46 der Optik 31 der Laserstrahl 11 in Abhängigkeit von der linken oder rechten Stellung des Wagens 26 auf die Optik 33 gelenkt. Verfährt der Wagen 26 von seiner in der Fig. 1 eingenommenen linken Stellung (Vollinie) in die rechte Stellung (Strichlinie), dann wird der Laserstrahl 11 mittels des Strahlabschalters 38 aus den Optiken 30, 31, 33 ausgeblendet und die drehbaren Reflektoren 44 in eine zueinander kollisionsfreie Stellung c, bewegt.

Wie die Fig. 3 zeigt, entsteht durch den hinter dem Strahlauftreffpunkt 47 liegenden Drehpunkt 48 in der Stellung c des Reflektors 46 ein Freiraum 44, der eine kollissionsfreie Vorbeifahrt der Optik 31 an der Optik 30 erlaubt. In der Stellung c ist der Reflektor 46 der Optik 30 unter einem Winkel von 90 Grad und die Optik 31 unter einem Winkel von 180 Grad zu den Laserstrahlen 11 angeordnet. Nach einer vorteilhaften Anordnung der Optiken 30 und 31 weisen deren Reflektoroberflächen 52 während der Vorbeifahrt zueinander, wobei die Reflektoren 46 so versetzt zueinander angeordnet sind, daß ein doppelter Freiraum 44 entsteht. Nach einem weiteren Ausführungsbeispiel ist der Drehpunkt 48 des Reflektors 46 nur bei einer Optik 30 oder 31 hinter dem Strahlauftreffpunkt 47 angeordnet, während der jeweils andere Reflektor 46 um den Strahlauftreffpunkt 47 gedreht wird. Durch diese Maßnahme kann der Laserstrahl 11 ebenfalls auf einer optischen Achse in zwei entgegengesetzte Richtungen gelenkt werden, ohne daß jedoch ein doppelter Freiraum 44 eingestellt werden kann.

Selbstverständlich kann der Freiraum auch durch eine Exzenterbewegung beim Drehen erreicht werden.

Nach einem weiteren Ausführungsbeispiel ist die Optik 30 derart ausgebildet; daß der Laserstrahl 11 während der Umlenkung von dem linken in den rechten Abschnitt der Verfahrstrecke des Wagens 26 auf die Optik 30 auftrifft.

Nach einer vorteilhaften Ausführung sind die Arbeitstische 13, 14 als fahrerloses Transportsystem ausgebildet, die über ein Führungssystem 39 die Bearbeitungsstation 10 mit weiteren Stationen einer Fertigungslinie, wie beispielsweise Be- und oder Entladestationen, verknüpfen. Über eine Steuerung 41 wird die Verknüpfung der Stationen automatisch gesteuert. Das Führungssystem 39 verläuft mindestens zwischen den Stützelementen 16 bis 21 der Tragkonstruktion 15 hindurch und ist in diesem Bereich im wesentlichen parallel oder senkrecht zu den Führungen 24, 25 des Wagens 26 ausgerichtet. Über an der Tragkonstruktion 15 und oder den Arbeits tischen 13, 14 oder einem Werkstück angeordnete Positioniereinrichtungen 40 wird die relative Lage zwischen den Arbeitstischen 13, 14 oder einem Werkstück und dem aus dem Bearbeitungskopf 32 austretenden Laserstrahl 11 festgelegt. Die Steuerung 41 übernimmt ausgehend von der festgelegten Lage der werkstücke/der Arbeitstische 13, 14 die Bewegung des Laserstrahles 11 entsprechend einem vorgegebenen Programm.

In Fig. 2 ist eine weitere Ausführungsvariante dargestellt, bei der zwischen dem links bzw. rechts zu dem senkrecht zu der Verfahrstrecke aus dem Laser 12 austetenden Laserstrahl 11 angeordneten Arbeitstischen 13, 14 ein weiterer Arbeitstisch 42 angeordnet ist. Vorteilhaft ist der Arbeitstisch 42 als Drehtisch ausgebildet, dessen Drehachse 43 senkrecht zu der Achse der Laserstrahlen 11 verläuft und deren Verlängerung sich mit der Achse der Laserstrahlen 11 schneidet. Bei dieser Ausführungsvariante ist der Reflektor 34 verstellbar ausgebildet, so daß die gesamte Optik 30 aus dem Strahlengang bewegbar ist und der Laserstrahl 11 in der Austrittsebene auf die Optik 33 des Schlittens auftrifft.

**Ansprüche**

1. Mehrachsige Bearbeitungsstation (10) mit einem einen Laserstrahl (11) aussendenden Laser (12) und einer neben mindestens einem Arbeitstisch (13, 14) angeordneten Tragkonstruktion (15), mit einem auf der Tragkonstruktion (15) über dem Arbeitstisch (13, 14) in einer ersten Achse (27) verfahrbaren Wagen (26), auf welchem eine den Laserstrahl (11) entlang der Verfahrstrecke des Wagens (26) in einen senkrecht zu diesen verfahrbaren Schlitten (28) umlenkende Optik (31) angeordnet ist,
dadurch gekennzeichnet,

daß der Laser (12) entlang der Verfahrstrecke des Wagens (26), vorzugsweise in der Mitte, angeordnet ist,
daß der Laserstrahl (11) unter einem Winkel, vorzugsweise senkrecht, zu der Verfahrstrecke des Wagens (26) auf mindestens eine in oder an der Tragkonstruktion (15) angeordnete und in ihrer Lage verstellbare Optik (30) auftrifft, die den aus dem Laser (12) austretenden Laserstrahl (11) unter einem Winkel auf die Optik (31) des Wagens (26) umlenkt und daß die Optik (31) des Wagens (26) in Abhängigkeit von der links oder rechts zu dem Laserstrahl (11) eingenommenen Stellung des Wagens (26) so verstellbar ist, daß der Laserstrahl (11) in jeder der Stellungen in den Schlitten (28) umgelenkt wird.

2. Mehrachsige Bearbeitungsstation nach Anspruch 1,
dadurch gekennzeichnet,

daß die Tragkonstruktion (15) mindestens zwei links bzw. rechts neben dem Arbeitstisch (13, 14) ange ordnete Stützelemente (16 bis 21) aufweist, auf denen zwei im wesentlichen parallel zu dem Arbeitstisch (13, 14) verlaufende Querträger (22, 23) zur Halterung der Führungen (24, 25) für den Wagen (26) angeordnet sind und der Laserstrahl (11) horizontal oder vertikal in die als Laserstrahlführung ausgebildete Tragkonstruktion (15) eintritt und in dieser zum Wagen (26) geführt wird.

3. Mehrachsige Bearbeitungsstation nach Anspruch 1 oder 2,
dadurch gekennzeichnet,

daß an dem Schlitten (28) ein Bearbeitungskopf (32) und eine Optik (33) angeordnet sind, die den Laserstrahl (11) zu dem Arbeitstisch (13, 14) umlenken und auf die Bearbeitungsstelle fokussieren.

4. Mehrachsige Bearbeitungsstation nach einem der Ansprüche 1 bis 3,
dadurch gekennzeichnet,

daß der Arbeitstisch (13, 14) über einem Führungssystem (39) angeordnet und entlang diesem bewegbar ist, daß das Führungssystem (39) mindestens zwischen den Säulen (16 bis 21) der Tragkonstruktion (15) im wesentlichen parallel oder senkrecht zu den Führungen (24, 25) des Wagens (26) verläuft, daß an dem Arbeitstisch (13, 14) und/oder der Tragkonstruktion (15) Positioniereinrichtungen (40) zum automatischen Festlegen der Lage des Arbeitstisches (13, 14) oder eines Werkstückes relativ zu dem aus dem Bearbeitungskopf (32) austretenden Laserstrahl (11) vorgesehen sind und der Arbeitstisch (13, 14) von einer Steuerung (41) automatisch zu einer Be- und/oder Entladestation steuerbar ist.

5. Mehrachsige Bearbeitungsstation nach einem der Ansprüche 1 bis 4,
dadurch gekennzeichnet,

daß der aus dem Laser (12) austretende Laserstrahl (11) in der Austrittsebene auf die Optik (33) des Schlittens auftrifft, die den Laserstrahl (11) auf einen als Drehtisch ausgebildeten Arbeitstisch (42) umlenkt.

6. Mehrachsige Bearbeitungsstation nach einem der Ansprüche 1 bis 5,
dadurch gekennzeichnet,
daß die Optiken (30) und, oder (31) einen drehbaren Reflektor (46) aufweisen, der um einen hinter dem Strahlauftreffpunkt (47) der Laserstrahlen (11) liegenden Drehpunkt (48) drehbar gelagert ist.

FIG.1

EP 0 321 686 A1

# FIG.2

FIG. 3

Europäisches
Patentamt

EUROPÄISCHER RECHERCHENBERICHT

Nummer der Anmeldung

EP 88 11 8384

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | EP-A-0 199 590 (WESTINGHOUSE) * Spalte 4, Zeile 5 - Spalte 5, Zeile 22; Spalte 6, Zeile 1 - Spalte 12, Zeile 8; Figuren 1-3 * --- | 1-3 | B 23 K 26/10 B 23 K 26/08 |
| A | US-A-3 749 878 (SULLIVAN et al.) * Spalte 6, Zeilen 5-18; Figur 4 * ----- | 1,3 | |

RECHERCHIERTE SACHGEBIETE (Int. Cl.4)

B 23 K 26/00

Der vorliegende Recherchenbericht wurde für alle Patentansprüche erstellt

| Recherchenort | Abschlußdatum der Recherche | Prüfer |
|---|---|---|
| DEN HAAG | 05-04-1989 | HERBRETEAU D.J-P.J. |

EPO FORM 1503 03.82 (P0403)